# EUROPEAN PATENT APPLICATION

(11) **EP 2 315 108 A1**
(43) Date of publication of application: **27.04.2011**
(21) Application number: 09844523.2
(22) Date of filing: 06.08.2009
(51) Int. Cl.: G06F 3/044

(54) **DIGITAL CAPACITIVE TOUCH CONTROL SCREEN**

(30) Priority: 11.05.2009 CN 200910140965
(71) Applicant: Inferpoint Systems Limited, Road Town, Tortola (VG)
(72) Inventor: CHEN, Qiliang, Shenzhen Guangdong 518052 (CN); LIU, Haiping, Shenzhen Guangdong 518052 (CN); CHEN, Meiying, Shenzhen Guangdong 518052 (CN)
(74) Representative: Moore, Graeme Patrick
(86) International application number: PCT/CN2009/073115
(87) International publication number: WO 2010/130111

(57) **Abstract**

In the field of touch screens and more particularly capacitive touch screens, a digital capacitive touch screen is provided, which includes a touch substrate and a touch circuit. The touch circuit has a touch excitation source and a touch signal detection unit. At least two staggered electrode groups are disposed on the touch substrate, and multiple electrode lines of the electrode groups are connected to the touch excitation source. In a working period of the touch circuit, for at least one moment, the touch excitation source applies touch signals to more than two electrode lines at the same time, and the touch signal detection unit detects the change of the touch signal on at least one of the electrode lines. Thereby, a high-definition and large-sized digital capacitive touch screen is obtained. The digital capacitive touch screen has a simple structure, low cost, and high reliability.

## Description

### BACKGROUND OF THE INVENTION

### Field of Invention

The present invention relates to a touch screen, and more particularly to a capacitive touch screen.

### Related Art

Touch is the most important sensory perception of human beings, and is the most natural way in human-machine interaction. The touch screen thus emerges and has already been widely applied in personal computers, smart phones, public information, intelligent household appliances, industrial control, and other fields. In the current touch field, the resistive touch screen, photoelectric touch screen, ultrasonic touch screen, and planar capacitive touch screen are mainly developed, and in recently years, the projected capacitive touch screen is developed rapidly.

So far, the resistive touch screen is still the mainstream product in the market. However, due to the double-layer substrate structure of the resistive touch screen, when the touch screen and the display panel are laminated in use, the reflection of the touch screen may greatly affect the display performance such as brightness, contrast, and chroma, thus greatly degrading the display quality, and the increase of the backlight brightness of the display panel may cause higher power consumption. The analog resistive touch screen has the problem of positioning drift, and needs calibration from time to time. In addition, the electrode contact working mode of the resistive touch screen also reduces the service life of the touch screen.

The display quality of the infrared touch screen and the ultrasonic touch screen is not affected. However, the cost of the infrared touch screen and the ultrasonic touch screen is high, and the water drop and dust may impair the working reliability of the touch screen. Particularly, due to their complicated structures and high power consumption, the infrared touch screen and the ultrasonic touch screen generally cannot be applied in portable products.

The planar capacitive touch screen has a single-layer substrate structure, and thus when the touch screen and the display panel are laminated in use, the touch screen only has a small impact on the display quality. However, the planar capacitive touch screen also has the problem of positioning drift, and needs to calibration from time to time. The water drop may also impair the working reliability of the touch screen. Particularly, due to its high power consumption and cost, the planar capacitive touch screen generally cannot be applied in portable products.

The projected capacitive touch screen may also have a single-layer substrate structure, and thus when the touch screen and the display panel are laminated in use, the touch screen only has a small impact on the display quality. However, the projected capacitive touch screen detects the position of the finger or other touch objects on the touch screen by measuring the influence of the finger or other touch objects on the coupling capacitance between the electrodes of the touch screen, that is, by measuring the influence of the finger or other touch objects on the charging/discharging of the electrodes of the touch screen. The locating point is obtained through analog computation, and thus the projected capacitive touch screen is not a real digital touch screen. The distributed capacitance in the manufacturing and use environment may affect the working reliability of the touch screen, and the interference of the display driving signal and other electrical signals may influence the working of the touch screen, and the water drop may also impair the working reliability of the touch screen. In addition, the projected capacitive touch screen has a high requirement for the resistance of the detecting line, such that the detecting line of the projected capacitive touch screen laminated with the display panel in use needs to have not only a low electrical conductivity transparent electrode layer like ITO, but also a high electrical conductivity electrode layer like metal. Therefore, the manufacturing process is complicated, and the cost is high, especially for the large-sized and even ultra large-sized touch screens.

### SUMMARY OF THE INVENTION

Accordingly, the present invention is directed to a real high-definition digital capacitive touch screen.

The basic working principle of the digital capacitive touch screen in the present invention is that, two staggered electrode groups are disposed on the touch substrate, multiple electrode lines of the electrode groups are connected to a touch excitation source, and the touch excitation source applies alternating current (AC) touch excitation signals to the electrode lines. When a finger of a human being or other touch objects approach to or touch a certain electrode line, the finger or other touch objects form a coupling capacitance with the electrode, and thus the touch excitation signal on the electrode line is leaked through the coupling capacitance. A touch circuit detects the variances of the touch signals on the electrode lines to find the electrode lines having a maximum leakage current or having a leakage current exceeding a threshold, so as to determine the position of the finger or other touch objects on the touch substrate.

In the present invention, the touch excitation signals are applied to the multiple electrode lines at the same time, such that the cross-talk and flowing of the touch signals between the detecting lines and between the detecting lines and the non-detecting lines are reduced, and the flowing direction of the touch signals is controlled, so as to enhance the accuracy of determining the touched electrodes, and achieve a real digital capacitive touch screen.

In the digital capacitive touch screen of the present invention, the touched electrode lines are determined by detecting relative values of the variances of the touch signals on the electrode lines, thereby lowering the requirement for the resistance of the electrode lines, and realizing large-sized and even ultra large-sized capacitive touch screens.

The following technical solution is provided to solve the technical problems of the present invention.

A digital capacitive touch screen includes a touch substrate and a touch circuit. The touch circuit has a touch excitation source and a touch signal detection unit. At least two staggered electrode groups are disposed on the touch substrate, and multiple electrode lines of the electrode groups are connected to the touch excitation source. In a working period of the touch circuit, for at least one moment, the touch excitation source applies touch signals to more than two electrode lines at the same time, and the touch signal detection unit selects at least one shielded electrode line as a detecting line. The detecting line detects the change of the touch signal flowing through the electrode when the touch signal is applied to the electrode. The shielded electrode refers to the electrode where the adjacent or non-adjacent electrode lines on two sides of the electrode line are applied with the touch signals, or the electrode where the electrode lines staggered with the electrode line are applied with the touch signals.

The following technical solutions are further provided to solve the technical problems of the present invention.

In a specific implementation of the present invention, a part of the electrode lines are selected as the detecting lines at each moment, the non-detecting lines are also applied with the touch signals when the detecting lines are applied with the touch signals, and the changes of the touch signals on the detecting lines are detected; the non-detecting lines applied with the touch signals are all of or a part of the non-detecting lines among the electrode lines connected to the touch circuit except for the detecting lines.

In a specific implementation of the present invention, when the detecting lines are applied with the touch signals and the changes of the touch signals flowing through the detecting lines are detected, the other electrodes staggered with the detecting lines are also applied with the touch signals; the other electrodes staggered with the detecting lines are all of or a part of the electrodes staggered with the detecting lines.

In a specific implementation of the present invention, when the detecting lines are applied with the touch signals and the changes of the touch signals flowing through the detecting lines are detected, the other electrodes not staggered with the detecting lines are also applied with the touch signals; the other electrodes not staggered with the detecting lines are all of or a part of the electrodes not staggered with the detecting lines.

In a specific implementation of the present invention, when the detecting lines are applied with the touch signals and the changes of the touch signals flowing through the detecting lines are detected, the other electrodes staggered or not staggered with the detecting lines are also applied with the touch signals; the other electrodes staggered or not staggered with the detecting lines are all of or a part of the electrodes staggered or not staggered with the detecting lines.

In a specific implementation of the present invention, the touch signals output by the touch circuit to the electrode lines are AC signals having frequencies not smaller than 50 KHz, including AC signals with zero amplitude.

In a specific implementation of the present invention, the touch signals applied on the electrodes share the same amplitude, phase, frequency, or serial number.

In a specific implementation of the present invention, the touch signals applied on the electrodes vary in at least one of the amplitude, phase, frequency, and serial number.

In a specific implementation of the present invention, when selecting the detecting lines, the touch circuit selects a part of the display screen electrode lines as a detecting line group at a moment, and detects the changes of the touch signals flowing through the detecting lines.

In a specific implementation of the present invention, when selecting the detecting lines, the touch circuit selects two or more parts of the electrode lines as two or more detecting line groups at the same moment, and respectively detects the changes of the touch signals flowing through the detecting line groups.

In a specific implementation of the present invention, each detecting line group is formed by one or more electrode lines.

In a specific implementation of the present invention, the touch circuit selects the detecting lines in a scanning manner, so as to select different parts of the electrode lines as the detecting lines at different moments.

In a specific implementation of the present invention, the touch circuit detects current signals and/or voltage signals in the detection of the touch signals on the electrode lines.

In a specific implementation of the present invention, the touch circuit detects at least one of amplitude, time, phase, frequency signal, and pulse number in the detection of the touch signals on the electrode lines.

In a specific implementation of the present invention, the touch circuit determines the touched electrode lines by detecting the touch signals or detecting differences between variances of the touch signals or variation rates of touch signals on the electrode lines.

In a specific implementation of the present invention, in order to more precisely determine the position of the touch object or reduce the number of the electrode lines connected to the touch circuit on the touch substrate, the touch circuit computes and determines the touched positions of the touch object among the electrode lines by detecting the touch signals or detecting differences between variances of the touch signals or variation rates of the touch signals on the electrode lines.

In a specific implementation of the present invention, the positions where the touch signals are detected or it is detected that the variances of the touch signals or the variation rates of the touch signals are maximum are determined as the touched positions, the positions where the touch signals are detected or it is detected that the variances of the touch signals or the variation rates of the touch signals exceed a preset threshold are determined as the touched positions, or the positions where the touch signals are detected or it is detected that the variances of the touch signals or the variation rates of the touch signals are maximum and exceed a preset threshold are determined as the touched positions.

In a specific implementation of the present invention, the electrode groups connected to the touch circuit on the touch substrate are two orthogonal electrode groups.

In a specific implementation of the present invention, each electrode line connected to the touch circuit on the touch substrate has an edge in the shape of a fold line, and two adjacent linear segments of the fold line form an angle ranging from 20° to 160°.

In a specific implementation of the present invention, the electrodes on the touch substrate include not only the electrode lines connected to the touch circuit but also the electrode lines not connected to the touch circuit.

In a specific implementation of the present invention, the at least two staggered electrode groups on the touch substrate are disposed on different substrates.

In a specific implementation of the present invention, the at least two staggered electrode groups on the touch substrate are disposed on different layers isolated by an insulation layer of the same substrate.

In a specific implementation of the present invention, the touch substrate is disposed with a shielded electrode insulated from the staggered electrode groups.

In a specific implementation of the present invention, the electrode lines connected to the touch circuit on the touch substrate are disposed on a touch surface of the touch substrate.

In a specific implementation of the present invention, the electrode lines connected to the touch circuit on the touch substrate are disposed on a non-touch surface of the touch substrate.

In a specific implementation of the present invention, the touch substrate is a flexible or rigid transparent substrate.

The present invention has the following beneficial effects compared with the prior art.

The present invention provides a high-definition digital capacitive touch screen. In the capacitive touch screen of the present invention, the touch signals are applied to the detecting lines and the non-detecting lines at the same time, so as to reduce the flowing of the touch signals between the detecting lines and between the detecting lines and the non-detecting lines, and control the flowing direction of the touch signals, such that the accuracy of determining the touched electrodes is enhanced to recognize each electrode line, and a real digital capacitive touch screen is achieved.

The amplitude, phase, frequency, or serial number of the touch signals applied to the detecting lines may be adjusted to different values, and the amplitude, phase, frequency, or serial number of the touch signals applied to the non-detecting lines may also be adjusted to be different from the amplitude, phase, frequency, or serial number of the touch signals applied to the detecting lines, so as to more precisely control the flowing direction of the touch signals.

The present invention provides a large-sized capacitive touch screen. In the digital capacitive touch screen of the present invention, the touched electrode lines are determined by detecting the touch signals or detecting differences between variances of the touch signals or variation rates of the touch signals on the electrode lines, that is, by detecting the relative values of the touch signals on the electrode lines. Thus, the requirement for the resistance of the electrode lines is not high, and the touched electrode lines can still be accurately determined by measuring the relative values of the touch signals on the electrode lines when the resistance of the electrode lines is increased due to the extension of the electrode lines in a large-sized touch screen, thereby achieving a large-sized and even ultra large-sized capacitive touch screen.

Regarding the conditions for determining the touched electrode lines, the electrode lines where it is detected that the variances of the touch signals are maximum and exceed a preset threshold are determined as the touched electrode lines, and the touch flat panel display adopts a single-point touch mode. Regarding the conditions for determining the touched electrode lines, the electrode lines where it is merely detected that the variances of the touch signals exceed a preset threshold may also be determined as the touched electrode lines, so that the digital capacitive touch screen of the present invention supports a multi-point touch mode.

The digital capacitive touch screen of the present invention has a simple structure, and can be easily obtained through the current manufacturing process of the display and the touch screen, so that the touch screen has a low cost and high reliability.

### BRIEF DESCRIPTION OF THE DRAWINGS

FIG. 1 is a schematic view of electrical connection according to a first embodiment, a second embodiment, and a third embodiment of the present invention;
FIG. 2 is a schematic view of electrical connection according to a fourth embodiment and a fifth embodiment of the present invention;
FIG. 3 is a schematic structural view according to a sixth embodiment of the present invention;
FIG. 4 is a schematic structural view according to a seventh embodiment of the present invention;
FIG. 5 is a schematic structural view according to an eighth embodiment of the present invention;
FIG. 6 is a schematic structural view according to a ninth embodiment of the present invention; and
FIG. 7 is a schematic structural view according to a tenth embodiment of the present invention.

### DETAILED DESCRIPTION OF THE INVENTION

### First Embodiment

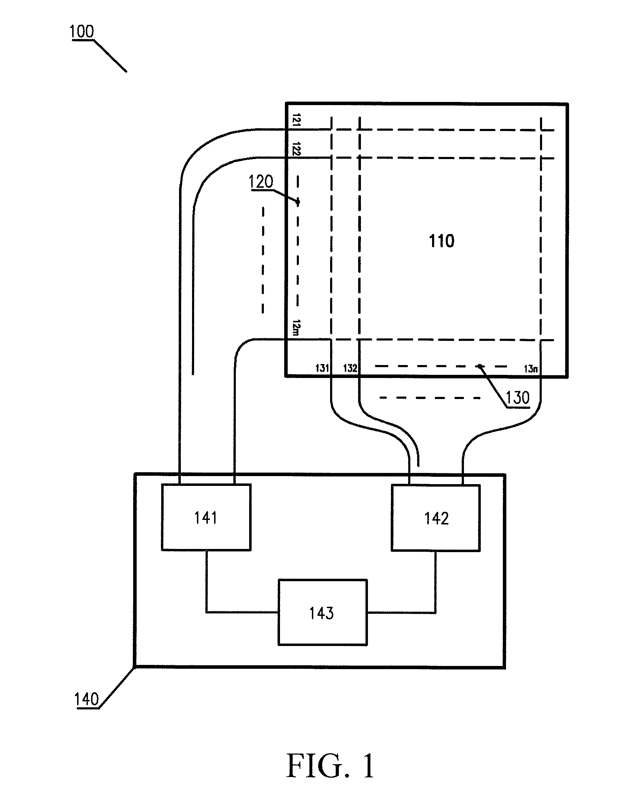

The digital capacitive touch screen 100 as shown in FIG. 1 includes a touch panel 110 and a touch circuit 140. A row electrode group 120 (including row electrode lines 121, 122, ..., 12m) and a column electrode group 130 (including column electrode lines 131, 132, ..., 13n) arranged orthogonal to each other are disposed on the touch panel 110. The touch circuit 140 has a row touch circuit 141, a column touch circuit 142, and a control and determination circuit 143. Multiple electrode lines of the row electrode group 120 are connected to the row touch circuit 141, multiple electrode lines of the column electrode group 130 are connected to the column touch circuit 142, and the row touch circuit 141 and the column touch circuit 142 are both connected to the control and determination circuit 143. The touch circuit includes a row touch circuit and a column touch circuit, each including a touch excitation source and a touch signal detection unit. In the subsequent description of this embodiment as well as the description of other embodiments, the touch excitation source and the touch signal detection unit may not be specified and will be collectively referred to as the "touch circuit", "row touch circuit", or "column touch circuit".

Firstly, the touch circuit 140 performs touch detection on the row electrode group 120. The row touch circuit 141 selects all the row electrode lines 121, 122, ..., 12m of the row electrode group 120 as row detecting lines, and applies touch signals to all the row electrode lines at the same time. The column touch circuit 142 also applies the same touch signals to all the column electrode lines of the column electrode group 130 as those applied by the row touch circuit 141 to the row electrodes. The row touch circuit 141 also detects the changes of the touch signals flowing through the row electrode lines respectively, and the control and determination circuit 143 determines the row electrode lines where the row touch circuit 141 detects that the variances of the touch signals flowing through are maximum and exceed a preset threshold as the touched row electrode lines. Then, the touch circuit 140 performs touch detection on the column electrode group 130. The column touch circuit 142 selects all the column electrode lines 131, 132, ..., 13n of the column electrode group 130 as column detecting lines, and applies touch signals to all the column electrode lines at the same time. The row touch circuit 141 also applies the same touch signals to all the row electrode lines of the row electrode group 120 as those applied by the column touch circuit 142 to the column electrodes. The column touch circuit 142 detects the changes of the touch signals flowing through the column electrode lines respectively, and the control and determination circuit 143 determines the column electrode lines where the column touch circuit 142 detects that the variances of the touch signals flowing through are maximum and exceed a preset threshold as the touched column electrode lines. The touch circuit 140 repeatedly and alternately performs touch detection on the row electrode group 120 and the column electrode group 130, and determines the positions of the touched points according to cross-points of the detected touched row electrode lines and the detected touched column electrode lines, so as to form a digital capacitive touch screen capable of recognizing m×n touch points.

Regarding the conditions for determining the touched electrode lines, the electrode lines where it is detected that the variances of the touch signals flowing through are maximum and exceed a preset threshold may not be determined as the touched electrode lines. Instead, the positions of the first three electrode lines where it is detected that the variances of the touch signals flowing through exceed a preset threshold are weighted by an average value of the variances of the touch signals to obtain the touch position, and the computed touch position is generally not located at the center of a certain electrode line, thus achieving a digital capacitive touch screen with higher precision capable of recognizing over m×n touch points.

In order to make the variances of the touch signals large enough when the operator touches the digital capacitive touch screen to resist the interference for ease of measurement, the touch signals need to have sufficient penetrating power, and the frequencies of the touch signals output by the touch circuit to the electrode lines are not smaller than 50 KHz.

In the detection of the touch signals on the electrode lines, the touch detection circuit may detect voltage signals and/or current signals, and may also detect amplitude, phase, frequency signal, or pulse number recorded by a counter during the charging/discharging time period of the electrode lines to the capacitor.

Regarding the conditions for determining the touched electrode lines, the electrode lines where it is merely detected that the variances of the touch signals flowing through exceed a preset threshold may also be determined as the touched electrode lines, so that the digital capacitive touch screen supports a multi-point touch mode.

### Second Embodiment

The digital capacitive touch screen 100 as shown in FIG. 1 includes a touch panel 110 and a touch circuit 140. A row electrode group 120 (including row electrode lines 121, 122, ..., 12m) and a column electrode group 130 (including column electrode lines 131, 132, ..., 13n) arranged orthogonal to each other are disposed on the touch panel 110. The touch circuit 140 has a row touch circuit 141, a column touch circuit 142, and a control and determination circuit 143. Multiple electrode lines of the row electrode group 120 are connected to the row touch circuit 141, multiple electrode lines of the column electrode group 130 are connected to the column touch circuit 142, and the row touch circuit 141 and the column touch circuit 142 are both connected to the control and determination circuit 143.

The touch circuit 140 performs touch detection on the row electrode group 120 and the column electrode group 130 simultaneously. The row touch circuit 141 selects all the row electrode lines 121, 122, ..., 12m of the row electrode group 120 as row detecting lines, and applies touch signals to all the row electrode lines at the same time. The column touch circuit 142 also applies the same touch signals to all the column electrode lines of the column electrode group 130 as those applied by the row touch circuit 141 to the row electrodes. The row touch circuit 141 also detects the changes of the touch signals flowing through the row electrode lines respectively, and the control and determination circuit 143 determines the row electrode lines where the row touch circuit 141 detects that the variances of the touch signals flowing through are maximum and exceed a preset threshold as the touched row electrode lines.

Similarly, the column touch circuit 142 selects all the column electrode lines 131, 132, ..., 13n of the column electrode group 130 as column detecting lines, and applies touch signals to all the column electrode lines at the same time. The row touch circuit 141 also applies the same touch signals to all the row electrode lines of the row electrode group 120 as those applied by the column touch circuit 142 to the column electrodes. The column touch circuit 142 detects the changes of the touch signals flowing through the column electrode lines respectively, and the control and determination circuit 143 determines the column electrode lines where the column touch circuit 142 detects that the variances of the touch signals flowing through are maximum and exceed a preset threshold as the touched column electrode lines. The touch circuit 140 repeatedly performs touch detection on the row electrode group 120 and the column electrode group 130, and determines the positions of the touched points according to cross-points of the detected touched row electrode lines and the detected touched column electrode lines, so as to form a digital capacitive touch screen capable of recognizing m×n touch points.

Regarding the conditions for determining the touched electrode lines, the electrode lines where it is detected that the variances of the touch signals flowing through are maximum and exceed a preset threshold may not be determined as the touched electrode lines. Instead, the positions of the first three electrode lines where it is detected that the variances of the touch signals flowing through exceed a preset threshold are weighted by an average value of the variances of the touch signals to obtain the touch position, and the computed touch position is generally not located at the center of a certain electrode line, thus achieving a digital capacitive touch screen with higher precision capable of recognizing over m×n touch points.

In the detection of the touch signals on the electrode lines, the touch detection circuit may detect voltage signals and/or current signals, and may also detect amplitude, phase, frequency signal, or pulse number recorded by a counter during the charging/discharging time period of the electrode lines to the capacitor.

Regarding the conditions for determining the touched electrode lines, the electrode lines where it is merely detected that the variances of the touch signals flowing through exceed a preset threshold may also be determined as the touched electrode lines, so that the digital capacitive touch screen supports a multi-point touch mode.

### Third Embodiment

The digital capacitive touch screen 100 as shown in FIG. 1 includes a touch panel 110 and a touch circuit 140. A row electrode group 120 (including row electrode lines 121, 122, ..., 12m) and a column electrode group 130 (including column electrode lines 131, 132, ..., 13n) arranged orthogonal to each other are disposed on the touch panel 110. The touch circuit 140 has a row touch circuit 141, a column touch circuit 142, and a control and determination circuit 143. Multiple electrode lines of the row electrode group 120 are connected to the row touch circuit 141, multiple electrode lines of the column electrode group 130 are connected to the column touch circuit 142, and the row touch circuit 141 and the column touch circuit 142 are both connected to the control and determination circuit 143.

Firstly, the touch circuit 140 performs touch detection on the row electrode group 120. The row touch circuit 141 selects one electrode line from the row electrode lines 121, 122, ..., 12m as a row detecting line in a scanning manner at each moment, applies a touch signal to the row detecting line, and detects the change of the touch signal flowing through the electrode line. Meanwhile, the row touch circuit 141 also applies the same touch signals to all the row electrode lines of the rest non-detecting lines as that applied to the detecting line. The column touch circuit 142 also applies the same touch signals to all the column electrode lines as that applied to the detecting line. The control and determination circuit 143 determines the row electrode lines where the row touch circuit 141 detects that the variances of the touch signals flowing through are maximum and exceed a preset threshold as the touched row electrode lines. Then, the touch circuit 140 performs touch detection on the column electrode group 130. The column touch circuit 142 selects one electrode line from the column electrode lines 131, 132, ..., 13n as a column detecting line in a scanning manner at each moment, applies a touch signal to the column detecting line, and detects the change of the touch signal flowing through the electrode line. Meanwhile, the column touch circuit 142 also applies the same touch signals to all the column electrode lines of the rest non-detecting lines as that applied to the detecting line. The row touch circuit 141 also applies the same touch signals to all the row electrode lines as that applied to the detecting line. The control and determination circuit 143 determines the column electrode lines where the column touch circuit 142 detects that the variances of the touch signals flowing through are maximum and exceed a preset threshold as the touched column electrode lines. The touch circuit 140 repeatedly and alternately performs touch detection on the row electrode group 120 and the column electrode group 130, and determines the positions of the touched points according to cross-points of the detected touched row electrode lines and the detected touched column electrode lines, so as to form a digital capacitive touch screen capable of recognizing m×n touch points.

When the touch signal is applied to the detecting line, the amplitude, phase, or frequency of the touch signals applied to the non-detecting lines may be adjusted to be different from that of the touch signal applied to the detecting line, so as to more precisely control the flowing direction of the touch signals. Specifically, the touch signal applied to the detecting line may be different from those applied to the non-detecting lines in one or two items of the amplitude, phase, and frequency.

In the detection of the touch signals on the electrode lines, the touch detection circuit may detect voltage signals and/or current signals, and may also detect amplitude, phase, frequency signal, or pulse number recorded by a counter during the charging/discharging time period of the electrode lines to the capacitor.

Regarding the conditions for determining the touched electrode lines, the electrode lines where it is detected that the variances of the touch signals flowing through are maximum and exceed a preset threshold may not be determined as the touched electrode lines. Instead, the positions of the first three electrode lines where it is detected that the variances of the touch signals flowing through exceed a preset threshold are weighted by an average value of the variances of the touch signals to obtain the touch position, and the computed touch position is generally not located at the center of a certain electrode line, thus achieving a digital capacitive touch screen with higher precision capable of recognizing over m×n touch points.

Regarding the conditions for determining the touched electrode lines, the electrode lines where it is merely detected that the variances of the touch signals flowing through exceed a preset threshold may also be determined as the touched electrode lines, so that the digital capacitive touch screen supports a multi-point touch mode.

To avoid a false touch, the control and determination circuit may not determine the following electrode lines as the touched electrode lines, that is, the electrode lines where although the row touch circuit detects that the variances of the touch signals are maximum and exceed a preset threshold, the variation rates of the touch signals with time are too large (false touch for which the touch time is too short) or the variation rates of the touch signals with time are too small (false touch for which the touch time is too long).

### Fourth Embodiment

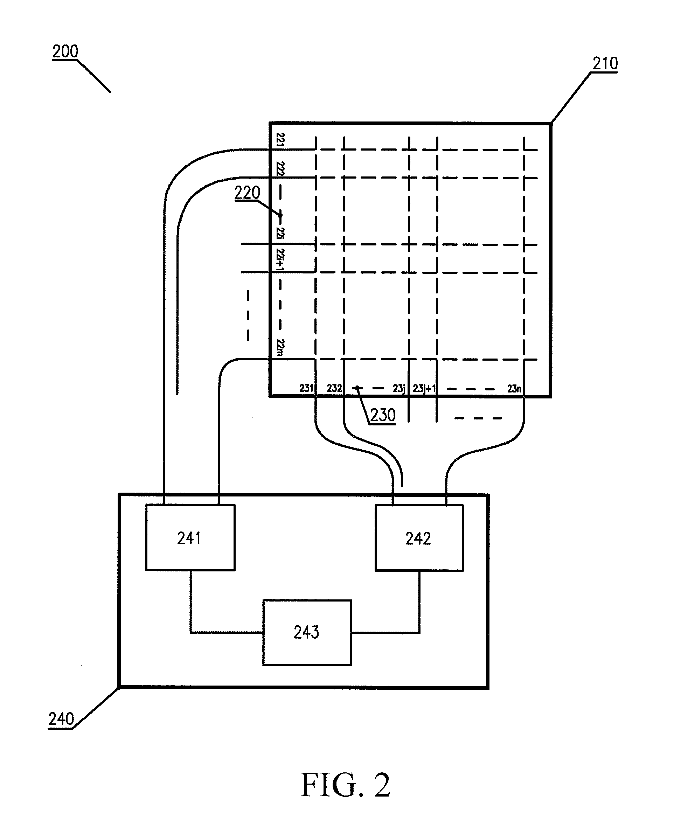

The digital capacitive touch screen 200 as shown in FIG. 2 includes a touch panel 210 and a touch circuit 240. A row electrode group 220 (including row electrode lines 221, 222, ..., 22i, 22i+1, ..., 22m) and a column electrode group 230 (including column electrode lines 231, 232, ..., 23j, 23j+1, ..., 23n) arranged orthogonal to each other are disposed on the touch panel 210. The touch circuit 240 has a row touch circuit 241, a column touch circuit 242, and a control and determination circuit 243. Multiple electrode lines of the row electrode group 220 are connected to the row touch circuit 241, multiple electrode lines of the column electrode group 230 are connected to the column touch circuit 242, and the row touch circuit 241 and the column touch circuit 242 are both connected to the control and determination circuit 243.

Firstly, the touch circuit 240 performs touch detection on the row electrode group 220. The row touch circuit 241 selects one electrode line from the row electrode lines 221, 222, ..., 22i as a detecting line and selects another electrode line from the row electrode lines 22i+1, ..., 22m as a detecting line in a scanning manner at each moment, applies touch signals to the two detecting lines, and detects the changes of the touch signals flowing through the two electrode lines respectively. Meanwhile, the row touch circuit 241 applies the touch signals of the same amplitude, phase, and frequency to all the row electrode lines of the rest non-detecting lines, and the column touch circuit 242 also applies the touch signals of the same amplitude, phase, and frequency to all the column electrode lines. The control and determination circuit 243 determines the row electrode lines where the row touch circuit 241 detects that the variances of the touch signals flowing through are maximum and exceed a preset threshold among all the row electrode lines 221, 222, ..., 22i, 22i+1, ..., 22m as the touched row electrode lines. Then, the touch circuit 240 performs touch detection on the column electrode group 230. The column touch circuit 242 selects one electrode line from the column electrode lines 231, 232, ..., 23j as a detecting line and selects another electrode line from the column electrode lines 23j+1, ..., 23n as a detecting line in a scanning manner at each moment, applies touch signals to the two detecting lines, and detects the changes of the touch signals flowing through the two electrode lines respectively. Meanwhile, the column touch circuit 242 applies the touch signals of the same amplitude, phase, and frequency to all the column electrode lines of the rest non-detecting lines, and the row touch circuit 241 also applies the touch signals of the same amplitude, phase, and frequency to all the row electrode lines. The control and determination circuit 243 determines the column electrode lines where the column touch circuit 242 detects that the variances of the touch signals flowing through are maximum and exceed a preset threshold among all the column electrode lines 231, 232, ..., 23j, 23j+1, ..., 23n as the touched column electrode lines. The touch circuit 240 repeatedly and alternately performs touch detection on the row electrode group 220 and the column electrode group 230, and determines the positions of the touched points according to cross-points of the detected touched row electrode lines and the detected touched column electrode lines, so as to form a digital capacitive touch screen capable of recognizing m×n touch points.

As the row touch circuit 241 and the column touch circuit 242 both select two electrode lines as the detecting lines at the same time, and perform touch detection in separated regions at the same time in a scanning manner, the time required for detecting the touch points on the whole touch screen is reduced.

When the touch signals are applied to the detecting lines, the amplitude, phase, or frequency of the touch signals applied to the non-detecting lines may be adjusted to be different from those of the touch signals applied to the detecting lines, so as to more precisely control the flowing direction of the touch signals. Specifically, the touch signals applied to the detecting lines may be different from those applied to the non-detecting lines in one or two items of the amplitude, phase, and frequency.

Regarding the conditions for determining the touched electrode lines, the electrode lines where it is detected that the variances of the touch signals flowing through are maximum and exceed a preset threshold may not be determined as the touched electrode lines, and instead, the electrode lines where it is merely detected that the variances of the touch signals flowing through exceed a preset threshold may be determined as the touched electrode lines, so that the touch flat panel display supports a multi-point touch mode.

To avoid a false touch, the control and determination circuit may not determine the following electrode lines as the touched electrode lines, that is, the electrode lines where although the row touch circuit detects that the variances of the touch signals are maximum and exceed a preset threshold, the variation rates of the touch signals with time are excessively large (false touch for which the touch time is too short) or the variation rates of the touch signals with time are excessively low (false touch for which the touch time is too long).

### Fifth Embodiment

The digital capacitive touch screen 200 as shown in FIG. 2 includes a touch panel 210 and a touch circuit 240. A row electrode group 220 (including row electrode lines 221, 222, ..., 22i, 22i+1, ..., 22m) and a column electrode group 230 (including column electrode lines 231, 232, ..., 23j, 23j+1, ..., 23n) arranged orthogonal to each other are disposed on the touch panel 210. The touch circuit 240 has a row touch circuit 241, a column touch circuit 242, and a control and determination circuit 243. Multiple electrode lines of the row electrode group 220 are connected to the row touch circuit 241, multiple electrode lines of the column electrode group 230 are connected to the column touch circuit 242, and the row touch circuit 241 and the column touch circuit 242 are both connected to the control and determination circuit 243.

Firstly, the touch circuit 240 performs touch detection on the row electrode group 220. The row touch circuit 241 selects one electrode line from the row electrode lines 221, 222, ..., 22i as a detecting line and selects another electrode line from the row electrode lines 22i+1, ..., 22m as a detecting line in a scanning manner at each moment, applies touch signals to the two detecting lines, and detects the changes of the touch signals flowing through the two electrode lines respectively. Meanwhile, the row touch circuit 241 applies the touch signals of the same amplitude, phase, and frequency to all the row electrode lines of the rest non-detecting lines, and the column touch circuit 242 also applies the touch signals of the same amplitude, phase, and frequency to all the column electrode lines. The control and determination circuit 243 determines the row electrode lines where the row touch circuit 241 detects that the variances of the touch signals flowing through are maximum and exceed a preset threshold among the row electrode lines 221, 222, ..., 22i as the touched row electrode lines, and the control and determination circuit 243 also determines the row electrode lines where the row touch circuit 241 detects that the variances of the touch signals flowing through are maximum and exceed a preset threshold among the row electrode lines 22i+1, ..., 22m as the touched row electrode lines. Then, the touch circuit 240 performs touch detection on the column electrode group 230. The column touch circuit 242 selects one electrode line from the column electrode lines 231, 232, ..., 23j, 23j+1, ..., 23n as a detecting line in a scanning manner at each moment, applies a touch signal to the detecting line, and detects the change of the touch signal flowing through the electrode line. Meanwhile, the column touch circuit 242 applies the touch signals of the same amplitude, phase, and frequency to all the column electrode lines of the rest non-detecting lines, and the row touch circuit 241 also applies the touch signals of the same amplitude, phase, and frequency to all the row electrode lines. The control and determination circuit 243 determines the column electrode lines where the column touch circuit 242 detects that the variances of the touch signals flowing through are maximum and exceed a preset threshold among all the column electrode lines 231, 232, ..., 23j, 23j+1, ..., 23n as the touched column electrode lines. The touch circuit 240 repeatedly and alternately performs touch detection on the row electrode group 220 and the column electrode group 230, and determines the positions of the touched points according to cross-points of the detected touched row electrode lines and the detected touched column electrode lines, so as to form a digital capacitive touch screen capable of recognizing i×n touch points and (m-i)×n touch points in upper-half and lower-half regions of the touch panel 210 separated by the row electrode line 22i.

When the touch signals are applied to the detecting lines, the amplitude, phase, or frequency of the touch signals applied to the non-detecting lines may be adjusted to be different from those of the touch signals applied to the detecting lines, so as to more precisely control the flowing direction of the touch signals. Specifically, the touch signals applied to the detecting lines may be different from those applied to the non-detecting lines in one or two items of the amplitude, phase, and frequency.

To avoid a false touch, the control and determination circuit may not determine the following electrode lines as the touched electrode lines, that is, the electrode lines where although the row touch circuit detects that the variances of the touch signals are maximum and exceed a preset threshold, the variation rates of the touch signals with time are excessively large (false touch for which the touch time is too short) or the variation rates of the touch signals with time are excessively low (false touch for which the touch time is too long).

### Sixth Embodiment

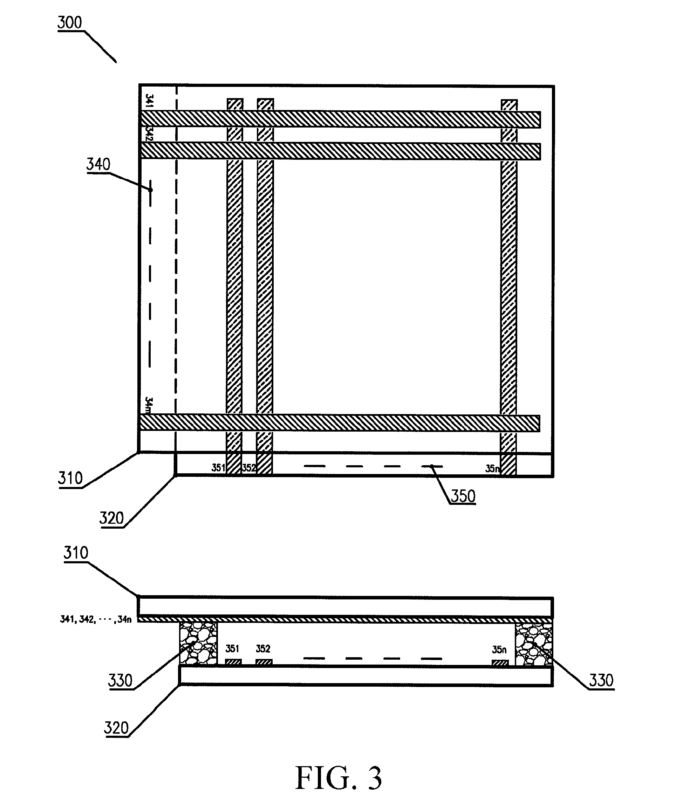

The touch panel 300 of the digital capacitive touch screen as shown in FIG. 3 includes an upper substrate 310 and a lower substrate 320. The upper substrate 310 and the lower substrate 320 are bonded by an adhesive material 330 into one piece. A strip electrode group 340 formed by electrode lines 341, 342, ..., 34m each having an edge in the shape of a straight line is disposed on an inner side surface of the upper substrate 310, and a strip electrode group 350 formed by electrode lines 351, 352, ..., 35n each having an edge in the shape of a straight line is disposed on an inner side surface of the lower substrate 320. The electrode group 350 and the electrode group 340 are arranged perpendicular to each other. Extending ends of the electrode group 340 and the electrode group 350 for connection to a touch circuit are respectively disposed on two perpendicular edges of the upper substrate 310 and the lower substrate 320.

### Seventh Embodiment

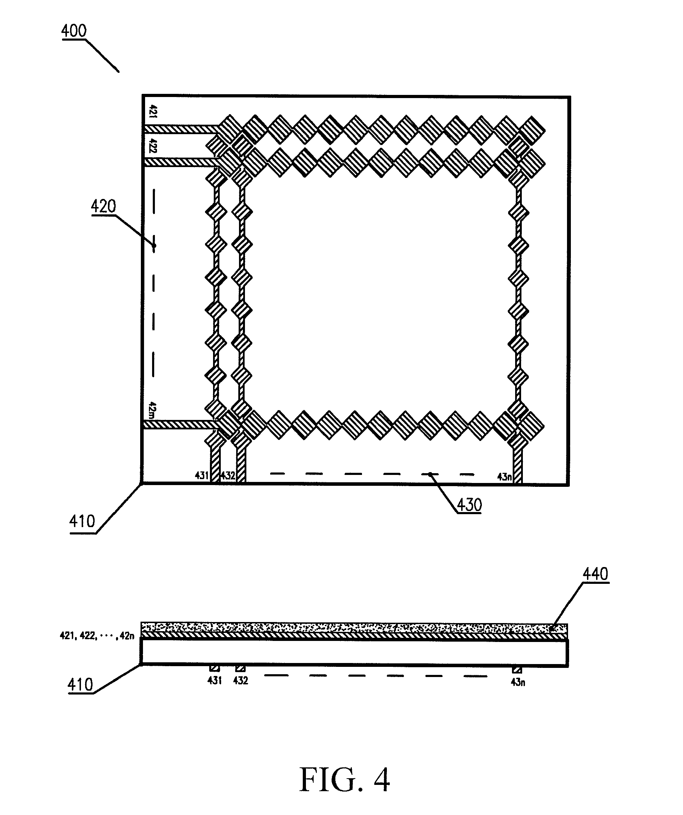

When the touch panel 400 of the digital capacitive touch screen as shown in FIG. 4 is placed in front of a display in use, to reduce the influence of the touch panel 400 on the display effect to the maximum extent, a single transparent substrate 410 is adopted. A strip electrode group 420 formed by electrode lines 421, 422, ..., 42m each having an edge in the shape of a fold line is disposed on an upper side surface of the substrate 410, and a strip electrode group 430 formed by electrode lines 431, 432, ..., 43n each having an edge in the shape of a fold line is disposed on a lower side surface of the substrate 410. A center line of each electrode line in the electrode group 430 is arranged perpendicular to that of each electrode line in the electrode group 420. Two adjacent linear segments of the fold line at the edge of each electrode line in the electrode group 420 and the electrode group 430 form an angle α ranging from 20° to 160°. Extending ends of the electrode group 420 and the electrode group 430 for connection to a touch circuit are respectively disposed on two perpendicular edges of the substrate 410. To prevent a user from directly touching the electrode group 420, an insulation layer 440 is disposed on an external side of the electrode group 420.

### Eighth Embodiment

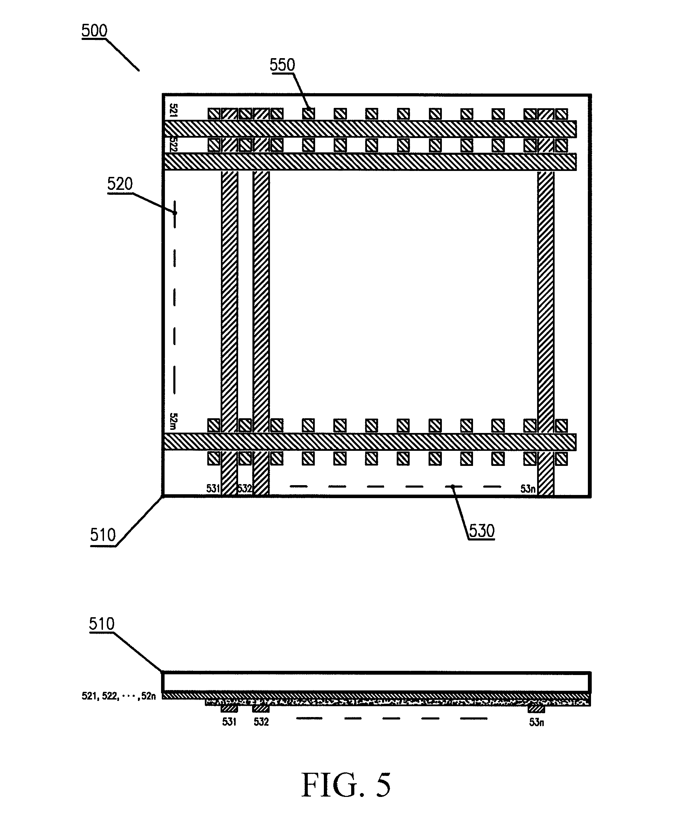

When the touch panel 500 of the digital capacitive touch screen as shown in FIG. 5 is placed in front of a display in use, to reduce the influence of the touch panel 500 on the display effect to the maximum extent, a single transparent substrate 510 is adopted. A strip electrode group 520 formed by electrode lines 521, 522, ..., 52m and a strip electrode group 530 formed by electrode lines 531, 532, ..., 53n, each of the electrode lines having an edge in the shape of a straight line, are disposed on a non-touch surface of the substrate 510. The electrode group 520 and the electrode group 530 are arranged on different layers and isolated by an insulation layer 540. To enable the touch panel 500 to achieve a uniform transmittance when being placed in front of a display in use, a dispersed electrode group 550 is disposed at the same layer as the electrode group 520 in a region not covered by the projection of the electrode group 520 and the electrode group 530 on the surface of the substrate 510. A center line of each electrode line in the electrode group 520 is arranged perpendicular to that of each electrode line in the electrode group 530. Extending ends of the electrode group 520 and the electrode group 530 for connection to a touch circuit are respectively disposed on two perpendicular edges of the substrate 510.

### Ninth Embodiment

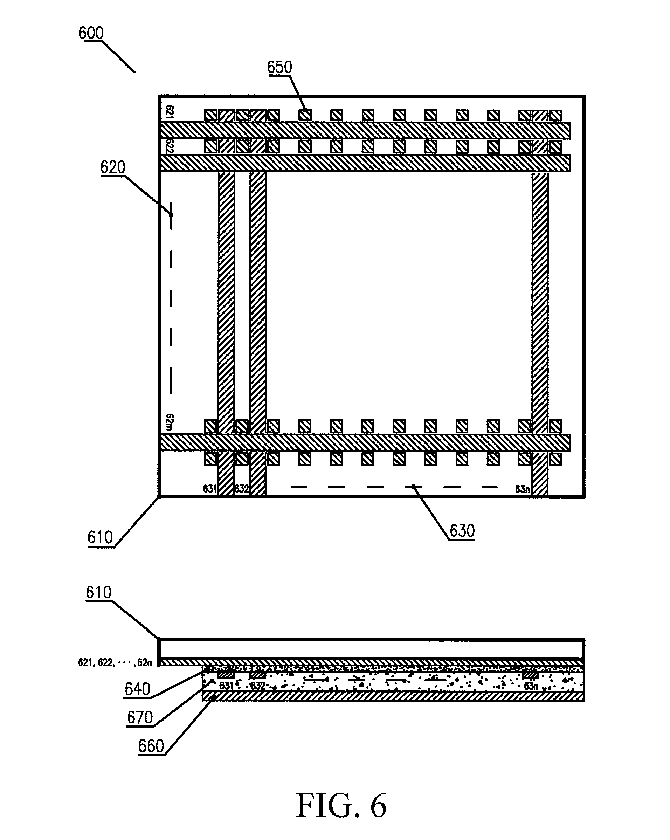

When the touch panel 600 of the digital capacitive touch screen as shown in FIG. 6 is placed in front of a display in use, to reduce the influence of the touch panel 600 on the display effect to the maximum extent, a single transparent substrate 610 is adopted. A strip electrode group 620 formed by electrode lines 621, 622, ..., 62m and a strip electrode group 630 formed by electrode lines 631, 632, ..., 63n, each of the electrode lines having an edge in the shape of a straight line, are disposed on a non-touch surface of the substrate 610. The electrode group 620 and the electrode group 630 are arranged on different layers and isolated by an insulation layer 640. To enable the touch panel 600 to achieve a uniform transmittance when being placed in front of a display in use, a dispersed electrode group 650 is disposed at the same layer as the electrode group 620 in a region not covered by the projection of the electrode group 620 and the electrode group 630 on the surface of the substrate 610. A center line of each electrode line in the electrode group 620 is arranged perpendicular to that of each electrode line in the electrode group 630. Extending ends of the electrode group 620 and the electrode group 630 for connection to a touch circuit are respectively disposed on two perpendicular edges of the substrate 610. To prevent the touch signals on the touch panel 600 from being interfered with by electrical signals in the display or machine, a shielded electrode 660 is additionally disposed on an internal side of the electrode group 630, and is isolated from the electrode group 630 by an insulation layer 670.

### Tenth Embodiment

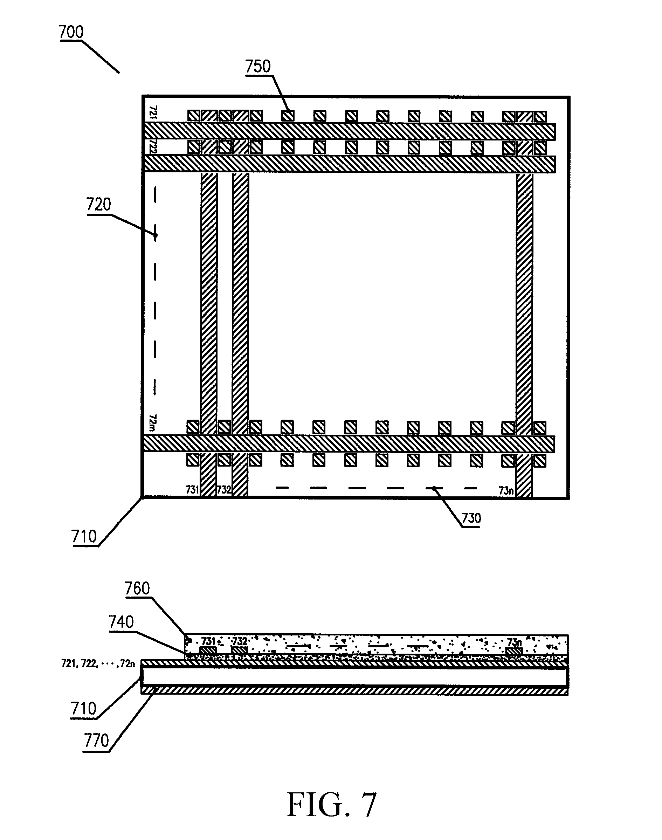

When the touch panel 700 of the digital capacitive touch screen as shown in FIG. 7 is placed in front of a display in use, to reduce the influence of the touch panel 700 on the display effect to the maximum extent, a single transparent substrate 710 is adopted. A strip electrode group 720 formed by electrode lines 721, 722, ..., 72m and a strip electrode group 730 formed by electrode lines 731, 732, ..., 73n, each of the electrode lines having an edge in the shape of a straight line, are disposed on a touch surface of the substrate 710. The electrode group 720 and the electrode group 730 are arranged on different layers and isolated by an insulation layer 740. To prevent a user from directly touching the electrode group 730, an insulation layer 760 is disposed on an external side of the electrode group 730. Further, to enable the touch panel 700 to achieve a uniform transmittance when being placed in front of a display in use, a dispersed electrode group 750 is disposed at the same layer as the electrode group 730 in a region not covered by the projection of the electrode group 720 and the electrode group 730 on the surface of the substrate 710. A center line of each electrode line in the electrode group 720 is arranged perpendicular to that of each electrode line in the electrode group 730. Extending ends of the electrode group 720 and the electrode group 730 for connection to a touch circuit are respectively disposed on two perpendicular edges of the substrate 710. To prevent the touch signals on the touch panel 700 from being interfered with by electrical signals in the display or machine, a shielded electrode 770 is additionally disposed on a non-touch surface of the substrate 710.

The above descriptions are merely preferred embodiments of the present invention, and are not intended to limit the scope of the invention. It is apparent to those of ordinary skill in the art that, modifications and variations can be made without departing from the spirit of the present invention, which should be covered in the protection scope of the present invention.

## Claims

1. A digital capacitive touch screen, comprising a touch substrate and a touch circuit, the touch circuit having a touch excitation source and a touch signal detection unit, wherein
at least two staggered electrode groups are disposed on the touch substrate, and multiple electrode lines of the electrode groups are connected to the touch circuit; in a working period of the touch circuit, for at least one moment, the touch excitation source applies touch signals to more than two electrode lines at the same time, and the touch signal detection unit selects at least one shielded electrode line as a detecting line; the detecting line detects the change of the touch signal flowing through the electrode when the touch signal is applied to the electrode; and the shielded electrode is the electrode where adjacent or non-adjacent electrode lines on two sides of the electrode line are applied with the touch signals, or the electrode where the electrode lines staggered with the electrode line are applied with the touch signals.

2. The digital capacitive touch screen according to claim 1, wherein
a part of the electrode lines are selected as the detecting lines at each moment, the non-detecting lines are also applied with the touch signals when the detecting lines are applied with the touch signals and the changes of the touch signals on the detecting lines are detected; and the non-detecting lines applied with the touch signals are all of or a part of the non-detecting lines among the electrode lines connected to the touch circuit except for the detecting lines.

3. The digital capacitive touch screen according to claim 1, wherein
when the detecting lines are applied with the touch signals and the changes of the touch signals flowing through the detecting lines are detected, the other electrodes staggered with the detecting lines are also applied with the touch signals; and the other electrodes staggered with the detecting lines are all of or a part of the electrodes staggered with the detecting lines.

4. The digital capacitive touch screen according to claim 1, wherein
when the detecting lines are applied with the touch signals and the changes of the touch signals flowing through the detecting lines are detected, the other electrodes not staggered with the detecting lines are also applied with the touch signals; and the other electrodes not staggered with the detecting lines are all of or a part of the electrodes not staggered with the detecting lines.

5. The digital capacitive touch screen according to claim 1, wherein
when the detecting lines are applied with the touch signals and the changes of the touch signals flowing through the detecting lines are detected, the other electrodes staggered or not staggered with the detecting lines are also applied with the touch signals; and the other electrodes staggered or not staggered with the detecting lines are all of or a part of the electrodes staggered or not staggered with the detecting lines.

6. The digital capacitive touch screen according to claim 1 or 2, wherein
the touch signals output by the touch circuit to the electrode lines are alternating current (AC) signals having frequencies not smaller than 50 KHz, including AC signals with zero amplitude.

7. The digital capacitive touch screen according to claim 1, wherein
the touch signals applied on the electrodes have the same amplitude, phase, frequency, or serial number, or vary in at least one of the amplitude, phase, frequency, and serial number.

8. The digital capacitive touch screen according to claim 1, wherein
when selecting the detecting lines, the touch circuit selects a part of the display screen electrode lines as a detecting line group at a moment, and detects the changes of the touch signals flowing through the detecting lines; or selects two or more parts of the electrode lines as two or more detecting line groups at the same moment, and respectively detects the changes of the touch signals flowing through the detecting line groups.

9. The digital capacitive touch screen according to claim 1 or 8, wherein
each detecting line group is formed by one or more electrode lines.

10. The digital capacitive touch screen according to claim 1 or 8, wherein
the touch circuit selects the detecting lines in a scanning manner, so as to select different parts of the electrode lines as the detecting lines at different moments.

11. The digital capacitive touch screen according to claim 1, wherein
the touch circuit detects at least one of amplitude, time, phase, frequency signal, and pulse number in the detection of the touch signals on the electrode lines.

12. The digital capacitive touch screen according to claim 1, wherein
the touch circuit determines the touched electrode lines by detecting the touch signals or detecting differences between variances of the touch signals or variation rates of the touch signals on the electrode lines.

13. The digital capacitive touch screen according to claim 1, wherein
the touch circuit computes and determines the touched positions among the electrode lines by detecting the touch signals or detecting differences between variances of the touch signals or variation rates of the touch signals on the electrode lines.

14. The digital capacitive touch screen according to claim 12 or 13, wherein
the positions where the touch signals are detected or it is detected that the variances of the touch signals or the variation rates of the touch signals are maximum are determined as the touched positions, the positions where the touch signals are detected or it is detected that the variances of the touch signals or the variation rates of the touch signals exceed a preset threshold are determined as the touched positions, or the positions where the touch signals are detected or it is detected that the variances of the touch signals or the variation rates of the touch signals are maximum and exceed a preset threshold are determined as the touched positions.

15. The digital capacitive touch screen according to claim 1, wherein
each electrode line connected to the touch circuit on the touch substrate has an edge in the shape of a fold line, and two adjacent linear segments of the fold line form an angle ranging from 20° to 160°.

16. The digital capacitive touch screen according to claim 1, wherein
the electrodes on the touch substrate comprise not only the electrode lines connected to the touch circuit but also the electrode lines not connected to the touch circuit.

17. The digital capacitive touch screen according to claim 1, wherein
the at least two staggered electrode groups on the touch substrate are disposed on different substrates, or disposed on different layers isolated by an insulation layer of the same substrate.

18. The digital capacitive touch screen according to claim 1, wherein
the touch substrate is disposed with a shielded electrode insulated from the staggered electrode groups.

19. The digital capacitive touch screen according to claim 1, wherein
the electrode lines connected to the touch circuit on the touch substrate are disposed on a touch surface or a non-touch surface of the touch substrate.

20. The digital capacitive touch screen according to claim 1, wherein
the touch substrate is a flexible or rigid transparent substrate.
